(19) Europäisches Patentamt / European Patent Office / Office européen des brevets

(11) **EP 3 434 505 B1**

(12) **EUROPEAN PATENT SPECIFICATION**

(45) Date of publication and mention
of the grant of the patent:
**11.05.2022 Bulletin 2022/19**

(21) Application number: **16895437.8**

(22) Date of filing: **25.03.2016**

(51) International Patent Classification (IPC):
**B60K 17/32** *(2006.01)*     **B60K 17/36** *(2006.01)*
**B60B 35/12** *(2006.01)*

(52) Cooperative Patent Classification (CPC):
**B60K 17/32; B60B 35/125; B60K 17/36;**
B60Y 2200/14; B60Y 2200/1422; B60Y 2200/22;
B60Y 2200/222; B60Y 2200/41; B60Y 2200/411

(86) International application number:
**PCT/JP2016/059649**

(87) International publication number:
**WO 2017/163406 (28.09.2017 Gazette 2017/39)**

(54) **BOGIE AXLE DEVICE BALANCE SYSTEM AND BOGIE AXLE DEVICE**

AUSGLEICHSSYSTEM FÜR DREHGESTELLACHSVORRICHTUNG SOWIE
DREHGESTELLACHSVORRICHTUNG

SYSTÈME D'ÉQUILIBRAGE DE DISPOSITIF D'ESSIEU DE BOGIE ET DISPOSITIF D'ESSIEU DE
BOGIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**30.01.2019 Bulletin 2019/05**

(73) Proprietor: **Okubo Gear Co. Ltd.
Atsugi-shi, Kanagawa 243-0801 (JP)**

(72) Inventors:
• **HIROSE, Nobuyuki
Atsugi-shi
Kanagawa 243-0801 (JP)**
• **MARUMOTO, Satoshi
Atsugi-shi
Kanagawa 243-0801 (JP)**

(74) Representative: **CSY Herts
Helios Court
1 Bishop Square
Hatfield, Hertfordshire AL10 9NE (GB)**

(56) References cited:
EP-A1- 1 902 891       EP-A1- 2 657 059
EP-A2- 0 520 389       DE-A1- 2 522 542
US-A- 6 053 837        US-A1- 2006 102 407
US-A1- 2011 245 012

## Description

## Technical Field

The present invention relates to a balance system which is capable of, in a bogie axle device supporting two axles arranged in the front and rear directions of a vehicle such that the two axles swing freely, suppressing a swing of a swing housing supporting the two axles, and a bogie axle device provided with the balance system.

## Background Art

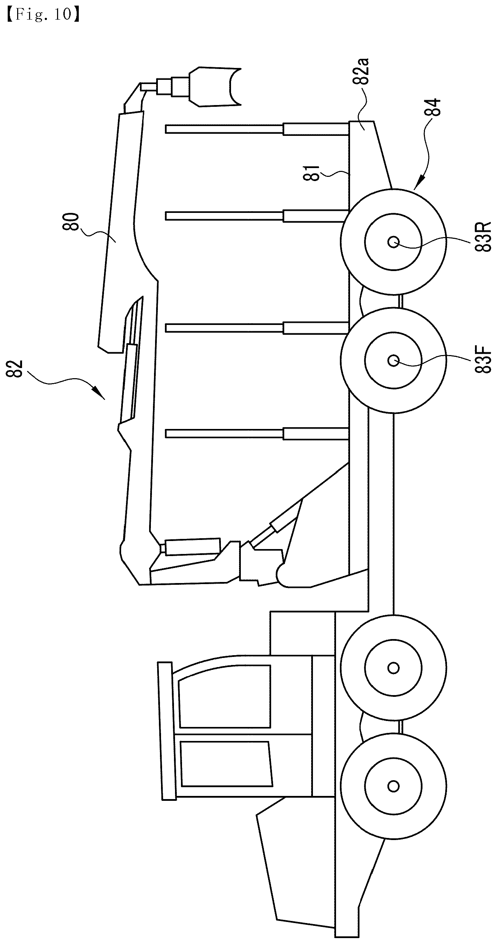

For example, in the field of forestry, self-propelling vehicles are utilized, such as a harvester which fells, limbs and crosscuts trees or the like, and as shown in Fig. 10, a forwarder 82 which loads short trunk materials subjected to crosscutting onto a cargo bed 81 by a grapple crane 80 and transports the trunk materials. Some harvesters and forwarders require higher running performance on hilly ground. In order to realize the performance, it is known that the forwarder 82 is also provided with a bogie axle device 84, the bogie axle device 84 supporting two axles 83F and 83R arranged in the front and rear directions of a vehicle such that the two axles swing freely relative to the vehicle.

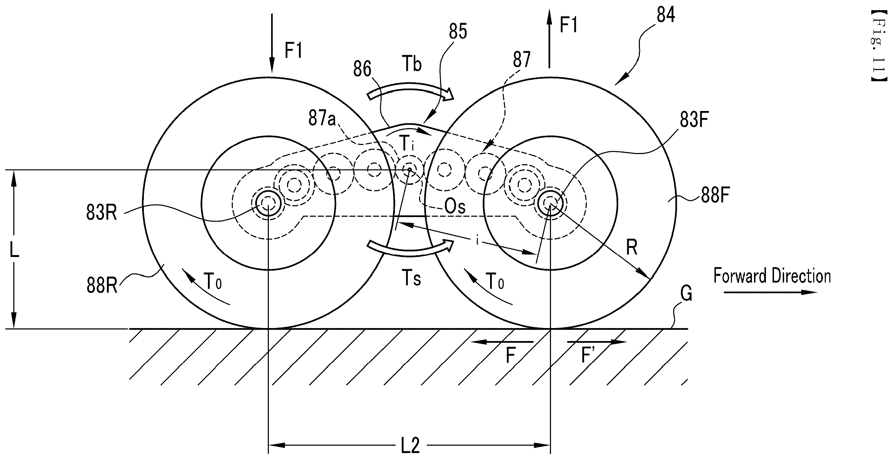

As shown in Fig. 11, the bogie axle device 84 includes a driving unit (not shown) fixed to a chassis 82a (see Fig. 10) of the vehicle, and a pair of left and right axle units 85 swinging freely relative to the driving unit. The driving unit transmits a driving force outputted from an engine of the vehicle to the left and right axle units 85. The pair of left and right axle units 85 each include: a swing housing 86 supported by the driving unit such that it swings freely relative to the driving unit; two axles 83F and 83R supported so as to rotate freely by the swing housing 86; and a driving-force transmitting mechanism 87 which transmits a driving force inputted by the driving unit to the two axles 83F and 83R. The driving-force transmitting mechanism 87 includes an input gear 87a for inputting the driving force of the driving unit therein, and a plurality of gears for transmitting the rotation of the input gear 87a to the axles 83F and 83R.

To the axles 83F and 83R, tires 88F and 88R are respectively attached, and when the vehicle is running forward on the right side of the figure, the tires 88F and 88R rotate clockwise, thereby generating a tire rotating torque To. The tire rotating torque To generates a tangential force F between the tires 88F and 88R and a ground surface G. In the direction opposite to the tangential force F, a reaction force F' is exerted on the swing housing 86, and thereby, a counterclockwise swinging torque Ts is exerted on a swing shaft Os of the swing housing 86. The swinging torque Ts is based upon a height L from the ground surface G up to the swing shaft Os and the reaction force F'. The tire rotating torque To, tangential force F, reaction force F' and swinging torque Ts are calculated by the following numerical formulas.

$$To = Ti \times i$$

$$F = To/R$$

$$F' = F$$

$$TS = F' \times L$$

To: tire rotating torque
F: tangential force on the tire tread
F': reaction force exerted on the swing housing
Ts: swinging torque
Ti: input torque into the driving-force transmitting mechanism
i: reduction ratio of the driving-force transmitting mechanism
R: tire radius
L: height from the ground surface up to the swing center

When the vehicle is at a halt, the same weight is exerted on the axles 83F and 83R, and hence, the ratio of the front-wheel load to the rear-wheel load is 50 % : 50 %. On the other hand, when the vehicle is running with the maximum torque being exerted on the driving-force transmitting mechanism 87, the swinging torque Ts on the swing housing 86 generates upward and downward reaction forces F1 and F2 on the axles 83F and 83R respectively. As a result, the ratio of the front-wheel load to the rear-wheel load is, for example, 19.3 % : 80.7 %. The lost load balance between the front wheel and the rear wheel worsens when the vehicle is running on a slope. For example, when it is running on a 30-degree inclination slope with the maximum torque being exerted thereon, the ratio of the front-wheel load to the rear-wheel load is, for example, 12.3 % : 87.7%. Consequently, the reaction forces F1 and F2 generated by the swinging torque Ts may cause the bogie axle device 84 to lose the load balance largely between the front wheel and the rear wheel, thereby inverting the swing housing 86. Further, the load on the rear-wheel axle 83R becomes heavy, thereby causing some concern about the strength thereof. The reaction forces F1 and F2 for the swinging torque Ts are calculated by the following numerical formulas.

$$F1 = F2 = Ts/L2$$

L2: = distance between the axles

In order to prevent the front wheel and the rear wheel from losing the load balance because of the swinging torque Ts, a conventional bogie axle device is provided with balance systems.

The balance system of EP0909671 includes two planetary gear mechanisms: a first-step planetary gear mechanism and a second-step planetary gear mechanism. A carrier output of the first-step planetary gear mechanism is inputted in a driving-force transmitting mechanism, and an output from a ring gear of the first-step planetary gear mechanism is inputted in a second-step planetary gear mechanism. In the second-step planetary gear mechanism, a ring gear is fixed to a swing housing, and from the ring gear, a swing suppressing torque Tb in the direction opposite to the swinging torque Ts is given to the swing housing, thereby suppressing a swing of the swing housing. In other words, in the balance system of EP 0 909 671, the driving force inputted from a driving unit is separated into a driving force inputted in the driving-force transmitting mechanism by the first-step planetary gear mechanism and a reaction force for suppressing a swing of the swing housing. Then, the second-step planetary gear mechanism amplifies the reaction force.

The balance system of EP0 520 389 A2 includes two planetary gear mechanisms, each planetary gear group thereof being coaxially held by a shared carrier. A ring gear of a first-step planetary gear mechanism is fixed to the inside of a revolving bearing, the revolving bearing supporting a swing housing so that it can swing freely. This amplifies the driving force inputted from a driving unit, and the amplified driving force is inputted in a driving-force transmitting mechanism by the sun gear of a second-step planetary gear mechanism. Then, a ring gear of the second-step planetary gear mechanism is fixed to the swing housing, and a reaction force inputted from the second-step planetary gear mechanism works on the swing housing. As a result, the swing suppressing torque Tb in the direction opposite to the swinging torque Ts is given to the swing housing, thereby suppressing a swing of the swing housing. In other words, in the balance system of EP 0 520 389 A2, the first-step planetary gear mechanism amplifies the driving force inputted from the driving unit, and the second-step planetary gear mechanism separates it into the driving force inputted in the driving-force transmitting mechanism and the reaction force for suppressing a swing of the swing housing.

## Summary of the Invention

## Problems to be solved by the Invention

A balance system for a bogie axle device is capable of suppressing a swing of the swing housing more effectively as a balance ratio (Tb/Ts) becomes higher, the balance ratio being equivalent to the ratio of the swing suppressing torque Tb to the swinging torque Ts. A comparison will be made between the balance systems of Patent Document 1 (EP0520389) and Patent Document 2 (EP0909671). In the balance system of Patent Document 1, a relatively high balance ratio of approximately 70 % can be obtained, but many structurally-complicated component parts are required, thereby increasing the costs. Specifically, the balance system needs four ring gears and four carriers, a ring gear which rotates inside of the first-step planetary gear mechanism, and the like. Further, the driving force is largely amplified in the first-step planetary gear mechanism, thereby causing some concern about the strength of the driving-force transmitting mechanism.

In contrast, the balance system of Patent Document 2 is provided with only two left and right carriers, and the balance system does not require any component part having a complicated shape. Therefore, its costs are lower than the balance system of Patent Document 1, and the weight is also lighter. However, its balance ratio is approximately 40 % which is lower than Patent Document 1. Further, the revolving bearing can impose restraints on the size of a first-step ring gear thereof, and the first-step and second-step planetary gear mechanisms need to have the same number of teeth. This makes it impossible to enlarge the size of a second-step ring gear thereof to heighten the reduction ratio. Still further, the first-step planetary gear mechanism amplifies the driving force inputted from the driving unit, and the second-step planetary gear mechanism separates it into the driving force inputted in the driving-force transmitting mechanism and the reaction force exerted on the swing housing. This makes it impossible to even heighten the balance ratio simply by changing the reduction ratio on the side of the reaction force.

As described above, in the balance systems of the prior art, the production costs will increase if the balance ratio is raised, while the balance ratio will fall if the production costs are reduced. In short, conventionally, the balance system capable of obtaining a high balance ratio could not be produced at low cost.

In order to solve the problems, it is an object of the present invention to provide a bogie axle device and a balance system which are capable of obtaining a high balance ratio at a low cost.

## Means for solving the Problems

In order to solve the problems, a balance system for a bogie axle device according to claim 1 is employed for a bogie axle device including: a driving unit fixed to a chassis of a vehicle; a swing housing supported so as to swing freely by the driving unit; a pair of front and rear axles supported so as to rotate freely by the swing housing; and a driving-force transmitting mechanism which transmits a driving force inputted by the driving unit to the pair of front and rear axles, and suppresses a swing of the swing housing which is caused when the vehicle is running. This balance system comprises a reaction-force separating mechanism and a planetary gear mechanism. The reaction-force separating mechanism includes: an input gear for inputting a driving force from the driving unit; an output gear for outputting the driving force to the driving-force transmitting mechanism; a first transmission gear engaging with the input gear; a second transmission gear engaging with the first transmission gear and the output gear; and a first carrier holding these gears and rotating freely around the input gear and the output gear. The planetary gear mechanism includes: a sun gear uniting and rotating with the first carrier; a planetary gear group which is supported by a second carrier fixed to the driving unit and engages with the sun gear; and a ring gear fixed to the swing housing and engaging with the planetary gear group.

In the balance system for a bogie axle device according to claim 1, the reaction-force separating mechanism separates a reaction force from the inputted driving force, changes the speed for the reaction force and inputs it in the planetary gear mechanism. Then, the planetary gear mechanism amplifies the inputted reaction force and inputs it in the swing housing.

According to claim 2, in the balance system for a bogie axle device of claim 1, the first transmission gear and the second transmission gear are each formed by a plurality of gears arranged around the input gear and the output gear respectively.

According to claim 3, in the balance system for a bogie axle device of claim 1 or 2, the input gear and the output gear are each arranged so as to rotate on a mutually different plane, and one of the first transmission gear and the second transmission gear has a tooth-part width in the axial directions which is greater than the other, so that the one engages on the rotational planes of the input gear and the output gear.

In addition, a bogie axle device according to claim 4 includes: a pair of left and right axle units having a driving unit fixed to a chassis of a vehicle, a swing housing supported so as to swing freely by the driving unit, a pair of front and rear axles supported so as to rotate freely by the swing housing, and a driving-force transmitting mechanism which transmits a driving force inputted by the driving unit to the pair of front and rear axles; and a balance system according to claim 1, which suppresses a swing of the swing housing which is caused when the vehicle is running.

**Advantages of the Invention**

In claims 1 and 4, only one ring gear (two in total on the left and right sides) is employed, the ring gear being expensive. Therefore, the costs become lower than those of the balance systems of Patent Documents 1 and 2. Further, the reaction-force separating mechanism separates, without using any ring gear, a reaction force from the driving force of the driving unit, and thereafter, the planetary gear mechanism amplifies the reaction force. Therefore, the speed-change ratio for the reaction force can be easily changed, thereby suppressing a swing of the swing housing appropriately in different types of bogie axle devices.

In claim 2, the first transmission gear and the second transmission gear are each formed by a plurality of gears. Therefore, changes in the speed can be stably made between the input gear and the first transmission gear, between the first transmission gear and the second transmission gear and between the second transmission gear and the output gear.

In claim 3, one of the first transmission gear and the second transmission gear has a tooth-part width in the axial directions which is greater than the other, and thereby, the input gear and the output gear are linked together. This makes it possible to reduce the size of the reaction-force separating mechanism.

**Brief Description of the Drawings**

Fig. 1 is a perspective view showing an exterior shape of a bogie axle device.
Fig. 2 is an exploded perspective view showing a configuration of the bogie axle device.
Fig. 3 is a sectional view of the main part of the bogie axle device.
Fig. 4 is an exploded perspective view showing a configuration of a balance system.
Fig. 5 is an exploded perspective view showing a configuration of a reaction-force separating mechanism.
Fig. 6 is a sectional view along the A-A line of Fig. 3 showing a configuration of the reaction-force separating mechanism.
Fig. 7 is a sectional view along the B-B line of Fig. 3 showing a configuration of the reaction-force separating mechanism.
Fig. 8 is a sectional view along the C-C line of Fig. 3 showing a configuration of the reaction-force separating mechanism.
Figs. 9(A), 9(B) and 9(C) are illustrations showing a reaction-force separating mechanism according to a second embodiment.
Fig. 10 is a side view of a forwarder provided with a bogie axle device.
Fig. 11 is a side view showing a configuration of a conventional bogie axle device.

**Mode for Carrying out the Invention**

Embodiments of the present invention will be below described with reference to the drawings.

(First Embodiment)

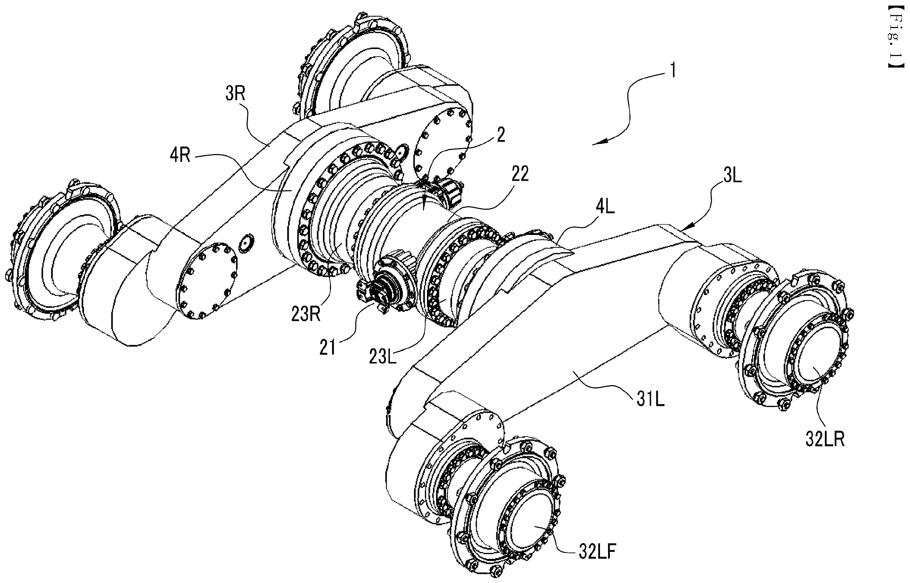

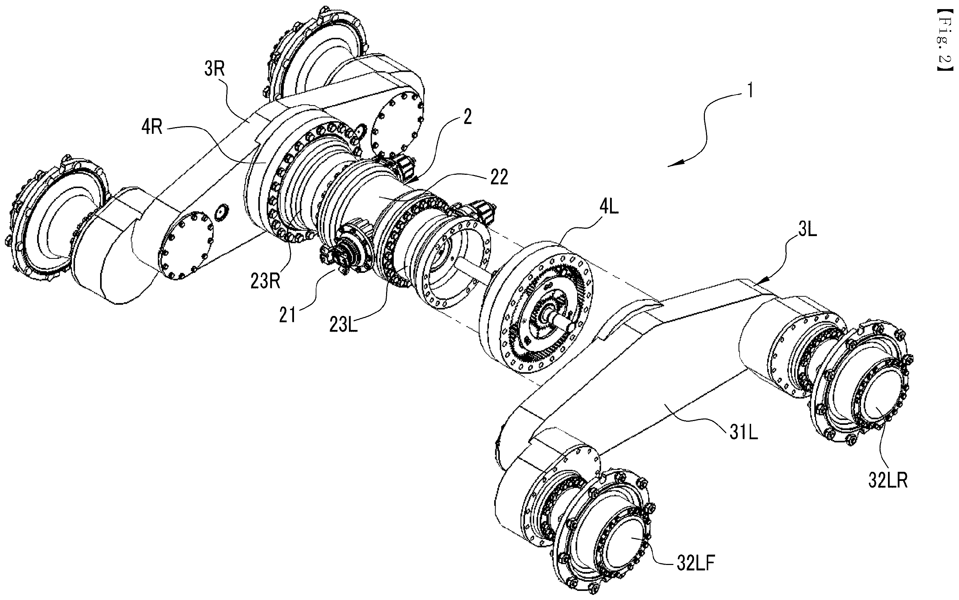

Figs. 1 to 3 are a perspective view showing the exterior of a bogie axle device 1 according to this embodiment, a partly- exploded perspective view thereof and a sectional view of the main part respectively. The bogie axle device 1 includes: a driving unit 2 fixed to a chassis of a vehicle such as a harvester and a forwarder; a pair of left and right axle units 3L and 3R swinging freely relative to the driving unit 2; and a pair of left and right balance systems 4L and 4R arranged between the driving unit 2 and each of the axle units 3L and 3R respectively.

The driving unit 2 includes: an input portion 21 for inputting a driving force outputted from an engine of the vehicle by means of a drive shaft (not shown) ; a unit housing 22 having a substantially cylinder shape, the input portion 21 being attached to the unit housing 22 on the vehicle-front side; and brake housings 23L and 23R each having a substantially cylinder shape and attached to the left and right ends of the unit housing 22 respectively. The unit housing 22 houses a differential mechanism which transmits the driving force inputted in the input portion 21 to the left and right axle units 3L and 3R. The brake housings 23L and 23R each house a brake mechanism which stops the axles from rotating.

The brake housings 23L and 23R are each formed with attachment holes, and through the attachment holes, aplurality of bolts screwed into the unit housing 22 are inserted, so that the unit housing 22 and each of the brake housings 23L and 23R are linked together.

The axle unit 3L includes: a swing housing 31L supported so as to swing freely by the driving unit 2, two axles 32LF and 32LR supported so as to rotate freely by the swing housing 31L, and a driving-force transmitting mechanism 33L arranged inside of the swing housing 31L which transmits the driving force inputted by the driving unit 2 to the two axles 32LF and 32LR. The driving-force transmitting mechanism 33L includes: an input gear 331L for inputting the driving force of the driving unit 2; a plurality of gears 332L and 333L which transmit the rotation of the input gear 331L up to the axles 32LF and 32LR; and the like. Tires (not shown) are each attached to the axles 32LF and 32LR. The axle unit 3R has the same formation as the axle unit 3L, and hence, a detailed description thereof is omitted.

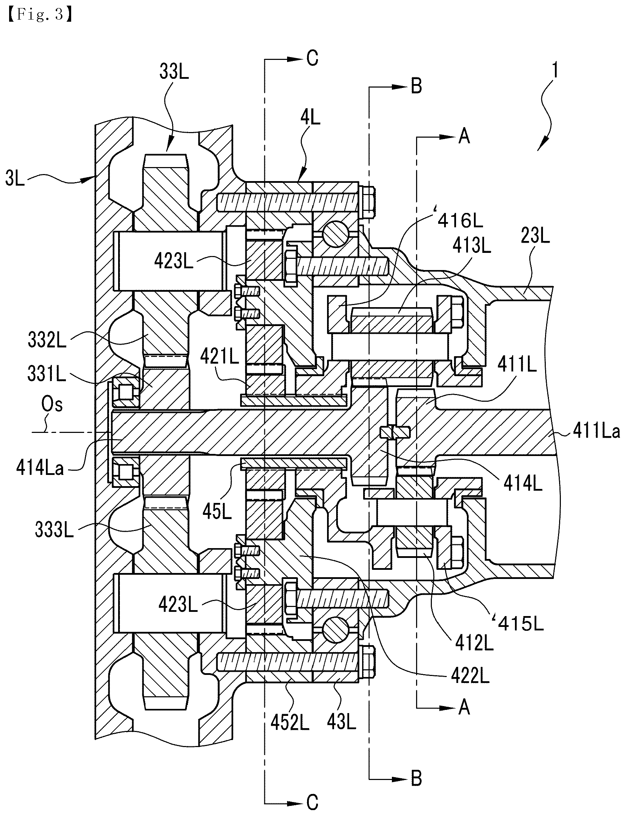

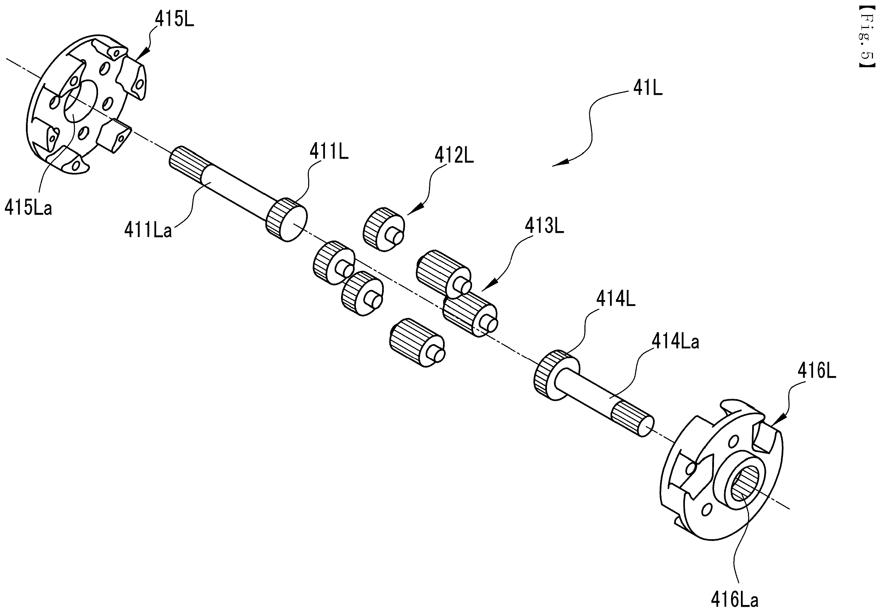

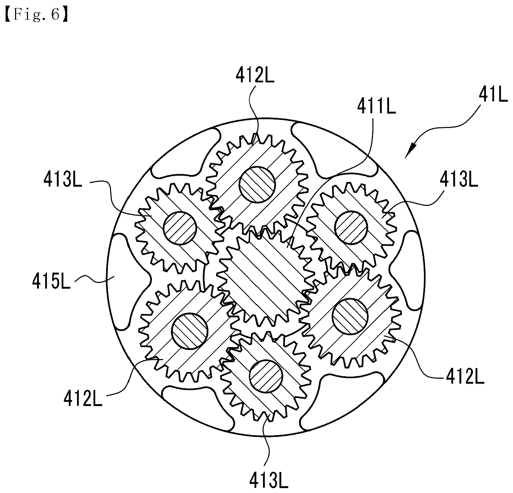

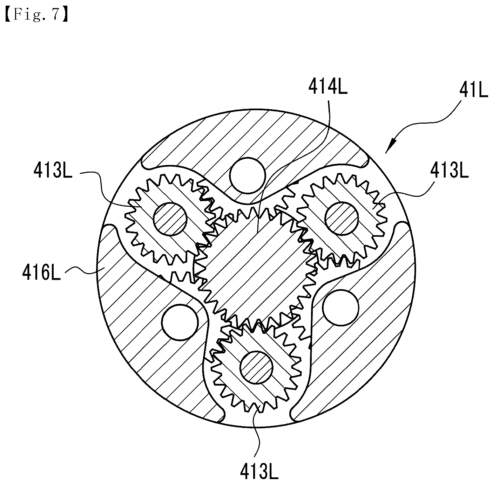

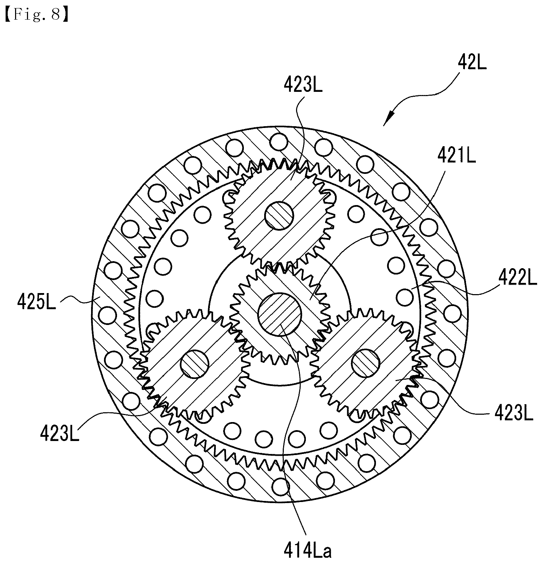

As shown in Figs. 3 to 5 and Figs. 6 to 8 equivalent to the A-A, B-B and C-C cross sections of Fig. 3 respectively, the balance system 4L includes a reaction-force separating mechanism 41L, a planetary gear mechanism 42L and a revolving bearing 43L. The reaction-force separating mechanism 41L separates the driving force inputted by the driving unit 2 into a driving force transmitted to the driving-force transmitting mechanism 33L and a reaction force transmitted to the planetary gear mechanism 42L.

The planetary gear mechanism 42L includes: a sun gear 421L uniting and rotating with a first carrier of the reaction-force separating mechanism 41L; a second carrier 422L fixed to the brake housing 23L of the driving unit 2, a planetary gear group 423L which is supported by the second carrier 422L and engages with the sun gear 421L; a ring-shaped holding plate 424L for holding the planetary gear group 423L on the second carrier 422L; and a ring gear 425L fixed to the swing housing 31L and engaging with the planetary gear group 423L.

The revolving bearing 43L is a rolling ball bearing which supports the swing housing 31L so that the swing housing 31L can swing freely. The revolving bearing 43L includes: an inner ring 431L which is fixed, together with the second carrier 422L, to the brake housing 23L by means of shared bolts; and an outer ring 432L which is fixed, together with the ring gear 425L, to the swing housing 31L by means of shared bolts.

The reaction-force separating mechanism 41L includes: an input gear 411L; a first transmission-gear group 412L; a second transmission-gear group 413L; an output gear 414L; and an inner carrier 415L and an outer carrier 416L which form the first carrier. The input gear 411L is united with an input shaft 411La for inputting the driving force from the driving unit 2. The input gear 411L is housed so as to rotate freely in the first carrier, and the input shaft 411La is inserted into the driving unit 2 through an opening 415La formed in the inner carrier 415L.

The first transmission-gear group 412L is held on the first carrier so as to rotate freely and engages with the input gear 411L. The second transmission-gear group 413L is, in the same manner as the first transmission-gear group 412L, held on the first carrier so as to rotate freely. The second transmission-gear group 413L has a tooth-part width in the axial directions which is greater than the first transmission-gear group 412L, so that it can engage with the first transmission-gear group 412L and the output gear 414L.

The output gear 414L is united with an output shaft 414La for outputting the driving force to the driving-force transmitting mechanism 33L. The output gear 414L is housed so as to rotate freely in the first carrier, and the output shaft 414La is inserted into the swing housing 31L through an opening 416La formed in the outer carrier 416L. To the front end part of the output shaft 414La, the input gear 331L of the driving-force transmitting mechanism 33L is attached.

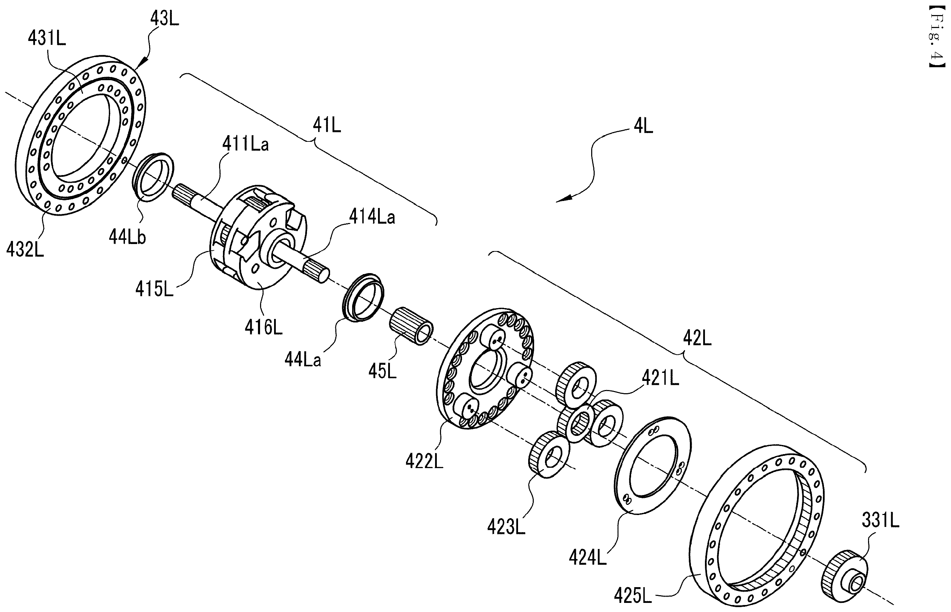

The inner carrier 415L and the outer carrier 416L are supported, via ring-shaped sleeves 44La and 44Lb shown in Fig. 4, as to be rotate freely by the second carrier 422L and the brake housing 23L. The inner carrier 415L and the outer carrier 416L rotate around the input gear 411L and the output gear 414L respectively. The opening 416La of the outer carrier 416L is formed on the inner surface with tooth rows in the axial directions. Into the opening 416La, a cylindrical coupling 45L is inserted, and the tooth rows of the opening 416La engage with the tooth rows in the axial directions on the peripheral surface of the coupling 45L.

The coupling 45L is formed with an opening for inserting the output shaft 414La. The front end part of the coupling 45L engages with the sun gear 421L of the planetary gear mechanism 42L, and thereby, the sun gear 421L unites and rotates with the first carrier. The balance system 4R has the same formation as the balance system 4L, and hence, a detailed description thereof is omitted.

Next, an operation of the embodiment will be described. In the bogie axle device 1, the driving unit 2 inputs the driving force in the input shaft 411La, and thereby, the input gear 411L is rotated. The rotation of the input gear 411L is transmitted to the output gear 414L via the first transmission-gear group 412L and the second transmission-gear group 413L. Then, the rotation of the output shaft 414La which unites with the output gear 414L is transmitted to the axles 32LF and 32LR via the input gear 331L and the driving-force transmitting mechanism 33L. As a result, the tires attached to the axles 32LF and 32LR are rotated, and thereby, the vehicle provided with the bogie axle device 1 starts to run.

The great torque of the driving unit 2 is inputted from the input gear 331L in the driving-force transmitting mechanism 33L. Then, the swinging torque Ts exerted on the swing housing 31L generates the reaction forces F1 and F2 on the axles 32LF and 32LR, and thereby, the load balance is lost between the front and rear wheels. In this case, the first carriers 415L and 416L start to rotate around the input gear 411L and the output gear 414L respectively. Consequently, the driving force of the driving unit 2 is separated into a driving force transmitted via the output gear 414L to the driving-force transmitting mechanism 33L and a reaction force transmitted via the sun gear 421L to the planetary gear mechanism 42L.

The planetary gear mechanism 42L amplifies the reaction force inputted in the sun gear 421L by means of the planetary gear group 423L and the ring gear 425L, and then, transmits it to the swing housing 31L. As a result, the swing suppressing torque Tb for suppressing a swing of the swing housing 31L is exerted on the swing shaft Os of the swing housing 31L, thereby suppressing a swing of the swing housing 31L. In the balance systems 4L and 4R according to the embodiment, the balance ratio (Tb/Ts) equivalent to the ratio of the swing suppressing torque Tb to the swinging torque Ts becomes approximately 90 %. Therefore, a swing of the swing housing 31L can be more effectively suppressed than the balance system of Patent Document 1 or 2.

As described above, in the balance systems 4L and 4R according to the embodiment, only the single planetary gear mechanism 42L (two in total on the left and right sides) is employed, and hence, the costs become lower than those of any other conventional balance system. Further, the reaction-force separating mechanism 41L separates a reaction force from the driving force of the driving unit, and thereafter, the planetary gear mechanism 42L amplifies the reaction force. Therefore, the speed-change ratio for the reaction force can be easily changed, thereby suppressing a swing of the swing housing 31L appropriately in different types of bogie axle devices.

In addition, the first transmission gear and the second transmission gear are each formed by a plurality of gears 412L and 413L respectively. Therefore, changes in the speed can be stably made between the input gear 411L and the first transmission-gear group 412L, between the first transmission-gear group 412L and the second transmission-gear group 413L and between the second transmission-gear group 413L and the output gear 414L. Further, the second transmission-gear group 413L has a wider tooth part in the axial directions, and thereby, the input gear 411L and the output gear 414L are linked together. This makes it possible to reduce the size of the reaction-force separating mechanism 41L.

(Second Embodiment)

Next, a second embodiment of the present invention will be described. Some component elements are given the same reference numerals and characters if they are identical to those of the first embodiment, and a detailed description thereof is omitted. In the first embodiment, the example is described where the reaction-force separating mechanism 41L reduces the speed for the driving force inputted by the driving unit 2. However, the reaction-force separating mechanism according to the present invention is also operable to increase the speed for the driving force, or output the driving force intact without changing the speed.

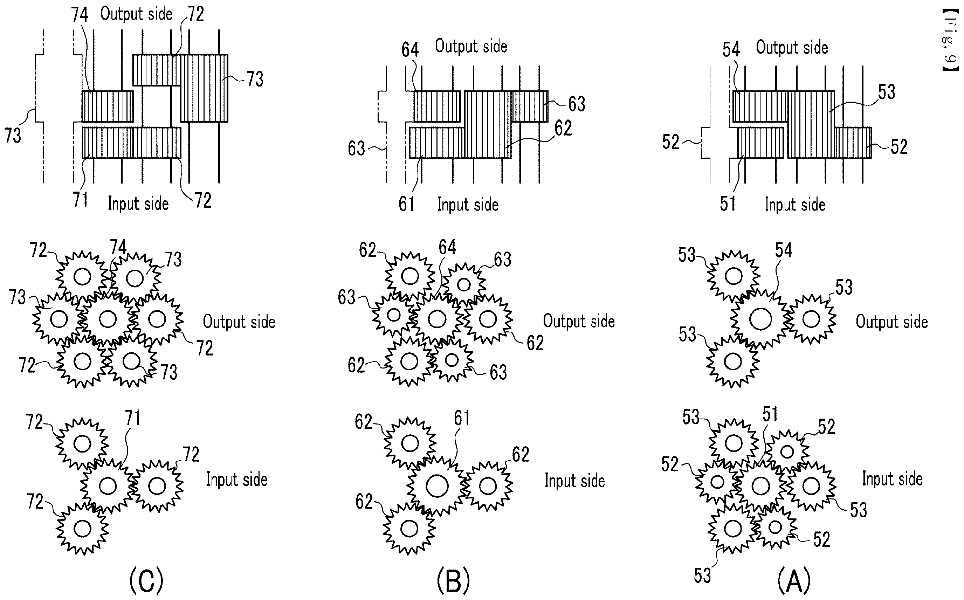

Figs. 9(A), 9(B) and 9(C) are schematic side views of gears forming the reaction-force separating mechanism and plan views of the gears on the input side and the output side. These figures show, from the right side: a formation (A) for allowing the reaction-force separating mechanism to reduce the speed for the driving force; a formation (B), to amplify the speed; and a formation (C), not to change the speed.

As shown in Fig. 9(A), in order to reduce the speed for the driving force, an input gear 51 having a relatively-small number of teeth engages with a first transmission gear 52 on the same plane, the first transmission gear 52 engages with a second transmission gear 53, and the second transmission gear 53 engages with an output gear 54 having a larger number of teeth than the input gear 51. In this formation, the input gear 51 has a relatively narrow diameter, and hence, a space to arrange the second transmission gear 53 can be secured on the same plane. This makes it possible to arrange seven gears in the first step on the input side and arrange four gears in the second step on the output side, which is the same as the first embodiment.

Furthermore, as shown in Fig. 9(B), in order to increase the speed for the driving force, an input gear 61 having a relatively-large number of teeth engages with a first transmission gear 62, the first transmission gear 62 engages with a second transmission gear 63, and the second transmission gear 63 engages with an output gear 64 having a smaller number of teeth than the input gear 61. In this case, the input gear 61 has a relatively wide diameter, and hence, a space to arrange the second transmission gear 63 cannot be secured on the same plane. This requires arranging four gears in the first step and arranging seven gears in the second step on the output side. In other words, in order to increase the speed for the driving force, as compared with the reduction in the speed, the gear arrangement on the input side and on the output side needs to be reversed.

Moreover, as shown in Fig. 9(C), in order to output the driving force at a constant speed with the speed remaining unchanged, an input gear 71 engages with a first transmission gear 72, the first transmission gear 72 engages with a second transmission gear 73, and the second transmission gear 73 engages with an output gear 74 having the same number of teeth as the input gear 71. In this case, three steps are formed for the gear arrangement between the input side and the output side. The first transmission gear 72 is divided in two, and between them, the output gear 74 is arranged, thereby preventing the first transmission gear 72 from interfering with the output gear 74.

Although each embodiment of the present invention has been above described in detail, the present invention is not limited to the embodiments as specific configurations thereof. Within the scope of the present invention as defined by the appended claims, variations in design are possible. For example, the bogie device and the balance system according to the present invention can also be employed for self-propelling vehicles which require high running performance, such as an agricultural tractor, harvester or a combine harvester, and a scraper or the like for construction equipment.

Description of the Symbols

| | |
|---|---|
| 1 | bogie axle device |
| 2 | driving unit |
| 3L, 3R | axle unit |
| 31L | swing housing |
| 32LF, 32LR | axle |
| 33L | driving-force transmitting mechanism |
| 4L, 4R | balance system |
| 41L | reaction-force separating mechanism |
| 411L | input gear |
| 412L | first transmission-gear group |
| 413L | second transmission-gear group |
| 414L | output gear |
| 415L | inner carrier (first carrier) |
| 416L | outer carrier (first carrier) |
| 42L | planetary gear mechanism |
| 421L | sun gear |
| 422L | second carrier |
| 425L | ring gear |

**Claims**

1. A balance system for a bogie axle device (1) which is employed for a bogie axle device including: a driving unit (2) fixed to a chassis of a vehicle; a swing housing (31L) supported so as to swing freely by the driving unit; a pair of front and rear axles supported so as to rotate freely by the swing housing; and a driving-force transmitting mechanism (33L) which transmits a driving force inputted by the driving unit to the pair of front and rear axles, and suppresses a swing of the swing housing (31L) which is caused when the vehicle is running, comprising:

    a reaction-force separating mechanism (41L) which includes an input gear (411L) for inputting a driving force from the driving unit, an output gear (414L) for outputting the driving force to the driving-force transmitting mechanism, a first transmission gear engaging with the input gear, a second transmission gear engaging with the first transmission gear and the output gear, and a first carrier holding these gears and rotating freely around the input gear and the output gear; and
    a planetary gear mechanism (42L) which: includes a sun gear (421L) uniting and rotating with the first carrier, a planetary gear group (423L) which is supported by a second carrier (422L) fixed to the driving unit and engages with the sun gear (421L), and a ring gear (425L) fixed to the swing housing (31L) and engaging with the planetary gear group (423L); and transmits, to the swing housing (31L), a reaction force for suppressing a swing of the swing housing.

2. The balance system for a bogie axle device according to claim 1, wherein the first transmission gear and the second transmission gear are each formed by a plurality of gears (412L and 413L) arranged around the input gear (411L) and the output gear (414L) respectively.

3. The balance system for a bogie axle device according to claim 1 or 2, wherein the input gear (411L) and the output gear (414L)are each arranged so as to rotate on a mutually different plane, and one of the first transmission gear and the second transmission gear has a tooth-part width in the axial directions which is greater than the other, so that the one engages on the rotational planes of the input gear and the output gear.

4. A bogie axle device (1) which includes: a pair of left and right axle units having a driving unit (2) fixed to a chassis of a vehicle, a swing housing (31L) supported so as to swing freely by the driving unit, a pair of front and rear axles supported so as to rotate freely by the swing housing (31L), and a driving-force transmitting mechanism (33L) which transmits a driving force inputted by the driving unit to the pair of front and rear axles; and a balance system according to claim 1, which suppresses a swing of the swing housing (31L) which is caused when the vehicle is running.

**Patentansprüche**

1. Ausgleichssystem für eine Drehgestellachsenvorrichtung (1), das für eine Drehgestellachsenvorrichtung eingesetzt wird, beinhaltend: eine Antriebseinheit (2), die an einem Fahrgestell eines Fahrzeugs befestigt ist; ein Schwinggehäuse (31L), das gestützt wird, um durch die Antriebseinheit frei zu schwingen; ein Paar Vorder- und Hinterachsen, die gestützt sind, um frei durch das Schwinggehäuse zu rotieren; und einen Antriebskraftübertragungsmechanismus (33L), der eine Antriebskraft, die durch die Antriebseinheit eingegeben wird, auf das Paar Vorder-und Hinterachsen überträgt und ein Schwingen des Schwinggehäuses (31L) unterdrückt, das verursacht wird, wenn das Fahrzeug läuft, umfassend:

   einen Reaktionskrafttrennmechanismus (41L), der ein Eingangsrad (411L) zum Eingeben einer Antriebskraft von der Antriebseinheit, ein Ausgangsrad (414L) zum Ausgeben der Antriebskraft an den Antriebskraftübertragungsmechanismus, ein erstes Übertragungsrad, welches in das Eingangsrad eingreift, ein zweites Übertragungsrad, welches in das erste Übertragungsrad und das Ausgangsrad eingreift, und einen ersten Träger beinhaltet, der diese Zahnräder hält und frei um das Eingangsrad und das Ausgangsrad rotiert; und
   einen Planetengetriebemechanismus (42L), der: ein Sonnenrad (421L), das sich mit dem ersten Träger vereinigt und damit rotiert, eine Planetengetriebegruppe (423L), die durch einen zweiten Träger (422L) gestützt wird, der an der Antriebseinheit befestigt ist und in das Sonnenrad (421L) eingreift, und ein Hohlrad (425L) beinhaltet, das an dem Schwinggehäuse (31L) befestigt ist und in die Planetengetriebegruppe (423L) eingreift; und auf das Schwinggehäuse (31L) eine Reaktionskraft zum Unterdrücken eines Schwingens des Schwinggehäuses überträgt.

2. Ausgleichssystem für eine Drehgestellachsenvorrichtung nach Anspruch 1, wobei das erste Übertragungsrad und das zweite Übertragungsrad jeweils durch eine Vielzahl von Rädern (412L und 413L) gebildet sind, die jeweils um das Eingangsrad (411L) und das Ausgangsrad (414L) angeordnet sind.

3. Ausgleichssystem für eine Drehgestellachsenvorrichtung nach Anspruch 1 oder 2, wobei das Eingangsrad (411L) und das Ausgangsrad (414L) jeweils angeordnet sind, um auf einer voneinander unterschiedlichen Ebene zu rotieren, und eines von dem ersten Übertragungsrad und dem zweiten Übertragungsrad eine Zahnteilbreite in den axialen Richtungen aufweist, die größer als die andere ist, sodass das eine an den Rotationsebenen des Eingangsrads und des Ausgangsrads eingreift.

4. Drehgestellachsenvorrichtung (1), die Folgendes beinhaltet: ein Paar linker und rechter Achseneinheiten, die eine Antriebseinheit (2) aufweisen, die an einem Fahrgestell eines Fahrzeugs befestigt ist, ein Schwinggehäuse (31L), das gestützt wird, um frei durch die Antriebseinheit zu schwingen, ein Paar Vorder- und Hinterachsen, die gestützt sind, um frei durch das Schwinggehäuse (31L) zu rotieren, und einen Antriebskraftübertragungsmechanismus (33L), der eine Antriebskraft, die durch die Antriebseinheit eingegeben wird, auf das Paar Vorder- und Hinterachsen überträgt; und ein Ausgleichssystem nach Anspruch 1, das ein Schwingen des Schwinggehäuses (31L) unterdrückt, das verursacht wird, wenn das Fahrzeug läuft.

**Revendications**

1. Système d'équilibrage pour un dispositif d'essieu de bogie (1) qui est utilisé pour un dispositif d'essieu de bogie comprenant : une unité d'entraînement (2) fixée à un châssis d'un véhicule; un boîtier oscillant (31L) supporté de façon à osciller librement par l'unité d'entraînement ; une paire d'essieux avant et arrière supportés de façon à tourner librement par le boîtier oscillant ; et un mécanisme de transmission de force d'entraînement (33L) qui transmet une force d'entraînement entrée par l'unité d'entraînement à la paire d'essieux avant et arrière, et supprime une oscillation du boîtier oscillant (31L) qui est provoqué lorsque le véhicule roule, comprenant :

   un mécanisme de séparation de force de réaction (41L) qui comprend une roue dentée d'entrée (411L) destinée à entrer une force d'entraînement en provenance de l'unité d'entraînement, une roue dentée de sortie (414L) destinée à délivrer en sortie la force d'entraînement au mécanisme de transmission de force d'entraînement, une première roue dentée de transmission en prise avec la roue dentée d'entrée, une seconde roue dentée de transmission en prise avec la première roue dentée de transmission et la roue dentée de sortie, et un premier support maintenant ces roues dentées et tournant librement autour de la roue dentée d'entrée et de la roue dentée de sortie ; et
   un mécanisme de train planétaire (42L) qui : comprend un planétaire (421L) s'unissant et tournant avec le premier support, un groupe de satellites (423L) qui est supporté par un second support (422L) fixé à l'unité d'entraînement et en prise avec le planétaire (421L) et une couronne (425L) fixée au boîtier oscillant (31L) et en prise avec le groupe de satellites (423L) ; et transmet, au boîtier oscillant (3 IL), une force de réaction pour supprimer une oscillation du boîtier oscillant.

2. Système d'équilibrage pour un dispositif d'essieu de bogie selon la revendication 1, ladite première roue dentée de transmission et ladite seconde roue dentée de transmission étant chacune formées par une pluralité de roues dentées (412L et 413L) agencées autour de la roue dentée d'entrée (411L) et de la roue dentée de sortie (414L) respectivement.

3. Système d'équilibrage pour un dispositif d'essieu de bogie selon la revendication 1 ou 2, ladite roue dentée d'entrée (411L) et ladite roue dentée de sortie (414L) étant chacune agencées de façon à tourner sur un plan mutuellement différent, et l'une de la première roue dentée de transmission et de la seconde roue dentée de transmission possédant une largeur de partie de dent dans les directions axiales qui est supérieure à l'autre, afin que l'un se mette en prise sur les plans de rotation de la roue dentée d'entrée et la roue dentée de sortie.

4. Dispositif d'essieu de bogie (1) qui comprend : une paire d'unités d'essieu gauche et droite possédant une unité d'entraînement (2) fixée à un châssis d'un véhicule, un boîtier oscillant (31L) supporté de façon à osciller librement par l'unité d'entraînement, une paire d'essieux avant et arrière supportés de façon à tourner librement par le boîtier oscillant (31L), et un mécanisme de transmission de force d'entraînement (33L) qui transmet une force d'entraînement entrée par l'unité d'entraînement à la paire d'essieux avant et arrière ; et un système d'équilibrage selon la revendication 1, qui supprime une oscillation du boîtier oscillant (31L) qui est provoqué lorsque le véhicule roule.

【Fig. 1】

【Fig.2】

【Fig.3】

【Fig. 4】

【Fig.5】

【Fig. 6】

【Fig. 7】

【Fig. 8】

【Fig.9】

【Fig. 10】

【Fig. 11】

**EP 3 434 505 B1**

## REFERENCES CITED IN THE DESCRIPTION

### Patent documents cited in the description

- EP 0909671 A
- EP 0520389 A2

- EP 0520389 A